## Europäisches Patentamt
## European Patent Office
## Office européen des brevets

(11) Numéro de publication: **0 197 416**
**B1**

## (12) FASCICULE DE BREVET EUROPEEN

(45) Date de publication du fascicule du brevet:
**20.09.89**

(51) Int. Cl.⁴: **G04B 37/16**, G04B 37/22, A44C 5/18

(21) Numéro de dépôt: **86104035.0**

(22) Date de dépôt: **24.03.86**

(54) **Ensemble constitué d'un élément de boîte de montre et d'un bracelet et procédé pour sa fabrication.**

(30) Priorité: **02.04.85 FR 8505107**

(43) Date de publication de la demande:
**15.10.86 Bulletin 86/42**

(45) Mention de la délivrance du brevet:
**20.09.89 Bulletin 89/38**

(84) Etats contractants désignés:
**CH DE FR GB LI**

(56) Documents cités:
**WO-A-82/04016**
**CH-B- 628 787**
**DE-A- 1 807 125**
**FR-A- 2 561 795**
**GB-A- 1 555 848**
**GB-A- 2 115 954**

(73) Titulaire: **ETA S.A. Fabriques d'Ebauches,**
**Schild-Rust-Strasse 17, CH-2540 Grenchen(CH)**

(72) Inventeur: **Mock, Elmar, Rue des Tilles 353,**
**CH-2603 Pery(CH)**
Inventeur: **Hotz, Jean-Marie, 57, Route Principale,**
**CH-2535 Frinvillier(CH)**

(74) Mandataire: **de Montmollin, Henri et al, ICB Ingénieurs**
**Conseils en Brevets SA Passage Max. Meuron 6,**
**CH-2001 Neuchâtel(CH)**

ACTORUM AG

## Description

La présente invention a pour objet un ensemble constitué d'un bracelet comportant au moins un brin dont au moins une première extrémité est réalisée en une première matière thermoplastique, d'un élément de boîte de montre réalisé en une deuxième matière thermoplastique ayant une température de fusion supérieure à celle de la première matière thermoplastique, et de moyens de fixation de l'extrémité dudit brin audit élément de boîte de montre.

La présente invention a également pour objet un procédé de fabrication d'un tel ensemble.

Dans l'ensemble décrit dans la demande de brevet GB-A 2 115 944, la glace de la boîte forme une seule pièce avec une paroi cylindrique qui entoure l'espace réservé au mouvement de la montre.

Cette glace et cette paroi sont réalisées, ensemble, par injection d'une matière thermoplastique transparente dans un moule adéquat.

Le bracelet de cet ensemble forme également une seule pièce avec une lunette qui entoure la paroi cylindrique de la glace.

Ce bracelet et cette lunette sont réalisés, ensemble, en injectant une autre matière thermofusible dans un moule dans lequel a été préalablement disposée la glace.

Du fait que le bracelet doit être souple, la température de fusion de la matière thermoplastique dont il est fait, ainsi que la lunette, est plus basse que celle de la matière dont sont faites la glace et sa paroi cylindrique. Il est d'ailleurs nécessaire qu'il en soit ainsi pour éviter que la glace et sa paroi cylindrique ne soient déformées pendant l'injection du bracelet et de la lunette.

Il résulte cependant de ce fait que, dans l'ensemble terminé, l'adhésion entre la lunette et la paroi cylindrique de la glace n'est pas suffisante, pour autant même qu'elle existe, pour relier mécaniquement, de manière sûre, cette lunette et cette glace.

La paroi cylindrique de cette glace doit donc être munie de protubérance destinées à être enrobées dans la matière de la lunette pour améliorer la liaison mécanique entre cette lunette et cette glace.

Cependant, la présence de ces protubérances complique la réalisation du moule dans lequel la glace et sa paroi cylindrique sont injectées.

En outre, ces protubérances diminuent la section du bracelet aux endroits où celui-ci les entoure, ce qui diminue la résistance à la traction de ce bracelet.

Dans l'ensemble décrit dans la demande de brevet GB-A 1 555 848, les extrémités du bracelet qui sont destinées à être reliées à la boîte comportent chacune un épaississement qui est disposé dans un logement ménagé dans la partie arrière de la carrure. Ces épaississements sont maintenus dans ces logements par le fond de la boîte qui est fixé à cette carrure.

La réalisation de cet ensemble nécessite donc, en plus des opérations de fabrication du bracelet, de la carrure et du fond, des opérations d'assemblage de ces trois éléments.

Dans l'ensemble décrit dans la demande de brevet DE-A 1 807 125, la carrure de la boîte est complètement entourée par une nervure de section circulaire qui lui est reliée par une zone médiane amincie.

Le bracelet de cet ensemble, qui est d'une seule pièce et qui est fabriqué séparément de la boîte, comporte une ouverture entourée par un bourrelet creux destiné à recevoir la nervure mentionnée ci-dessus.

La réalisation de cet ensemble nécessite donc également, en plus des opérations de fabrication du boîtier et du bracelet, une opération d'assemblage de ces deux éléments.

Cette opération d'assemblage, qui nécessite une déformation du bourrelet pour pouvoir y introduire la nervure entourant la carrure, est possible grâce au fait que le bracelet est en un matériau souple. Mais, à cause de cette souplesse, il suffit d'exercer une force relativement faible sur le boîtier pour le séparer du bracelet. Il y a donc un certain risque de perdre ce boîtier si celui-ci se sépare accidentellement de ce bracelet.

La demande de brevet WO-A 82/04016 décrit un procédé permettant d'assembler de manière étanche un tuyau en chlorure de polyvinyle à un récipient en un polymère polyoléfine, ces deux matériaux ne pouvant pas être soudés ou collés directement l'un à l'autre.

Ce procédé comporte le collage au tuyau d'un manchon formé d'un tube interne en un matériau pouvant être collé au chlorure de polyvinyle et d'un tube externe en un matériau ayant une faible température de fusion.

Le manchon est ensuite introduit dans le goulot du récipient, et l'ensemble est chauffé jusqu'à une température telle que le matériau du tube externe fond et adhère à ce goulot.

L'application d'un tel procédé à la fabrication d'un ensemble formé d'une boîte de montre et d'un bracelet n'est guère envisageable à cause de sa complexité.

Un but de la présente invention est de proposer un ensemble comportant un élément de boîte de montre et un bracelet dont la réalisation ne requiert aucune opération d'assemblage telles que celles qui sont nécessaires à la réalisation des ensembles décrits dans les demandes de brevet GB-A 1 555 848, DE-A 1 807 125 et WO-A 82/04016 mentionnées ci-dessus, et dans lequel la liaison mécanique entre l'élément de boîte et le bracelet est assurée sans qu'il soit absolument nécessaire de munir cet élément de boîte de protubérances comme dans la demande de brevet GB-A 2 115 954 également mentionnée ci-dessus.

Ce but est atteint par l'ensemble défini par la revendication 1 annexée.

Un autre but de la présente invention est de proposer un procédé de fabrication d'un tel ensemble.

Ce but est atteint par le procédé défini par la revendication 9 annexée.

D'autres buts et avantages de la présente invention seront rendus évidents par la description qui va être faite maintenant à l'aide du dessin dans lequel:

- la figure 1 est une vue en plan partielle et schématique d'un exemple d'un ensemble selon l'invention;

– les figures 2 à 6 sont des vues en coupe longitudinale partielle et schématique de diverses variantes de l'ensemble de la figure 1;

– les figures 7 et 8 sont respectivement des vues en plan et en coupe longitudinale partielles et schématiques d'une variante du bracelet de l'ensemble des figures 1 à 6;

– les figures 9 et 10 sont respectivement des vues en plan et en coupe longitudinale partielles et schématiques d'une autre variante du bracelet de l'ensemble des figures 1 à 6;

– la figure 11 est une vue en plan schématique d'un fermoir pouvant se combiner aux bracelets des figures 1 à 10; et

– les figures 12 et 13 sont respectivement des coupes selon les axes A–A et B–B du fermoir de la figure 11.

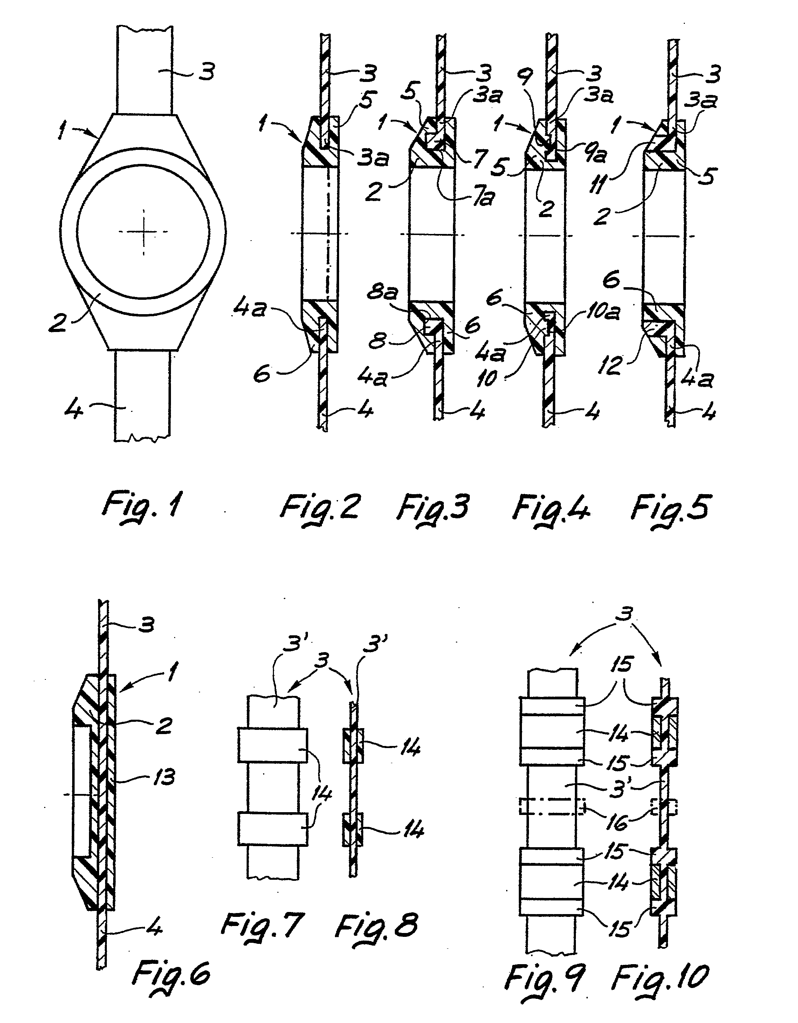

L'ensemble 1 représenté schématiquement et partiellement à la figure 1 comporte un élément de boîte de montre 2 et un bracelet ayant deux brins désignés par 3 et 4.

L'élément 2 peut simplement constituer la carrure de la boîte.

Il peut également constituer la carrure et le fond de la boîte.

Cette dernière possibilité est représentée par le trait mixte de la figure 2.

L'élément 2 comporte des moyens de fixation du mouvement et de la glace de la montre ainsi que, le cas échéant, du fond de la boîte. Ces moyens peuvent être de nature quelconque et ne seront pas décrits ici.

L'élément 2 représenté aux figures 2 à 5 comporte deux parties désignées par 5 et 6 qui enserrent étroitement les extrémités 3a et 4a des brins 3, respectivement 4. Ces brins 3 et 4 sont solidaires des parties 5 et 6 et ne peuvent pas s'en détacher.

Les brins 3 et 4 du bracelet sont réalisés, d'une manière qui sera décrite plus loin, en une première matière thermoplastique ayant la propriété d'être souple aux températures usuelles d'emploi. Une telle matière peut faire partie, par exemple, de la classe des élastomères thermoplastiques. De bons résultats ont été obtenus avec la matière vendue sous le nom commercial de PEBAX (marque déposée) par la maison ATOCHEM à Serquigny (France).

L'élément de boîtier 2 est réalisé, d'une manière qui sera également décrite plus loin, en une deuxième matière thermoplastique ayant la propriété d'être solide aux températures usuelles d'emploi et, en outre, d'avoir une température de fusion supérieure à la température de fusion de la première matière plastique. Cette deuxième matière plastique peut être, par exemple, une résine polyamide du genre de celle qui est vendue sous le nom commercial de RILSAN (marque déposée) par la maison ATOCHEM mentionnée ci-dessus.

L'ensemble 1 peut être fabriqué très simplement. Cette fabrication consiste, tout d'abord, à injecter la matière plastique choisie pour constituer les brins 3 et 4 dans un moule de forme adéquate, à une température égale ou supérieure à sa température de fusion. Cette injection peut se faire simultanément pour les deux brins 3 et 4, ou séparément.

Dans une deuxième étape, la matière plastique choisie pour constituer l'élément de boîte 2 est moulée sur les extrémités des brins 3 et 4 obtenus dans la première étape. Ce surmoulage est réalisé par injection de cette matière plastique dans un deuxième moule, ayant en creux la forme de l'élément de boîte 2, à une température égale ou supérieure à sa température de fusion.

Lors de cette dernière injection, la matière des extrémités des brins 3 et 4 est chauffée à température supérieure à sa température de fusion par la deuxième matière plastique qui vient à son contact, et fond au moins superficiellement.

Dans la zone où les deux matières en fusion sont en contact, il se forme une couche d'un mélange intime, voire même d'une sorte d'alliage, de ces deux matières plastiques.

Après refroidissement, cette couche assure la liaison mécanique entre les brins 3 et 4 et l'élément de boîte 2 qui deviennent ainsi solidaires.

Dans une variante de l'ensemble 1 des figures 1 et 2 qui est représentée à la figure 3, les extrémités 3a et 4a des brins 3 et 4 qui sont enserrées par les parties 5 et, respectivement, 6 de l'élément 2 comportent des protubérances 7, respectivement 8. Ces protubérances 7 et 8 sont disposées dans des logements 7a et, respectivement, 8a ménagés dans les parties 5 et 6 de l'élément 2.

Les protubérances 7 et 8 peuvent avoir une forme quelconque, par exemple la forme de nervures transversales entourant complètement les brins 3 et 4 ou situées sur une partie seulement de la périphérie de ces brins 3 et 4. Les logements 7a et 8a ménagés dans les parties 5 et 6 de l'élément de boîte 2 ont bien entendu une forme correspondant à la forme de ces protubérances.

Dans une autre variante de l'ensemble 1 des figures 1 et 2, qui est représentée à la figure 4, les parties 5 et 6 de l'élément de boîte 2 comportent des protubérances 9 et, respectivement, 10, qui sont disposées dans des logements 9a et, respectivement 10a, ménagés chacun dans une des extrémités des brins 3 et 4.

Les considérations faites ci-dessus à propos de la forme et de la disposition des protubérances 7 et 8 et des logements 7a et 8a correspondants de la figure 3 sont également valables dans le cas des protubérances 9 et 10 et des logements 9a et 10a de la figure 4.

Les protubérances et les logements décrits ci-dessus ont pour effet de renforcer la liaison entre les brins 3 et 4 et l'élément de boîte 2. Lorsque de telles protubérances et de tels logements sont prévus, le choix des matières plastiques utilisables pour réaliser l'ensemble 1 s'élargit, car il n'est plus nécessaire que ces matières adhèrent l'une à l'autre comme dans le cas des figures 1 et 2.

Dans une variante de l'ensemble 1 de la figure 3, représentée à la figure 5, les brins 3 et 4 comportent respectivement des protubérances 11 et 12 analogues aux protubérances 7 et 8 de la figure 3. Cependant, ces protubérances 11 et 12 ont une épaisseur telle qu'elles apparaissent sur au moins une des faces de l'élément de boîte 2. La forme de la partie visible des protubérances 11 et 12 pouvant être choisie très librement, ces dernières ont donc un effet esthétique, en plus de leur effet de renforcement de la liaison entre les brins 3 et 4 et l'élément de boîte 2.

Dans une autre variante de l'ensemble 1 des figures 1 et 2, représentée à la figure 6, les brins 3 et 4 sont réunis par une partie commune 13 et ne forment qu'une seule pièce avec cette dernière. La partie commune 13 est entièrement entourée par la matière de l'élément de boîte 2.

La forme de cette partie commune 13 peut être choisie très librement. Lorsque l'élément de boîte 2 comporte le fond de la boîte, comme dans le cas de la figure 6, la partie commune 13 peut, par exemple, être rectiligne et avoir la même largeur que les brins 3 et 4.

Lorsque l'élément de boîte 2 ne comporte que la carrure de la boîte, la partie commune 13 peut, par exemple, se diviser en deux parties passant dans l'épaisseur de cette carrure, de part et d'autre de l'ouverture destinée à recevoir le mouvement de la montre. Cette dernière possibilité n'est pas illustrée.

Il est évident que, dans le cas de cette figure 6, la partie commune 13 peut également comporter une ou plusieurs protubérances semblables aux protubérances 7, 8, 11 ou 12 des figures 3 et 5, l'élément de boîte 2 comportant alors les logements correspondants. De même, l'élément de boîte 2 peut comporter une ou plusieurs protubérances semblables aux protubérances 10 de la figure 4, la partie commune 13 comportant alors le ou les logements correspondants. Ces diverses possibilités ne sont pas illustrées.

Toutes les variantes de l'ensemble 1 qui ont été décrites ci-dessus à l'aide des figures 3 à 6, et d'autres variantes qui peuvent être imaginées, peuvent bien entendu être fabriquées en utilisant exactement le même procédé que celui qui a été décrit ci-dessus dans le cas de l'ensemble 1 des figures 1 et 2. Les protubérances telles que les protubérances 7, 8, 11 ou 12 ou les logements tels que les logements 9a et 10a sont obtenus en donnant la forme voulue au moule utilisé pour injecter la première matière plastique, et les logements, respectivement les protubérances, correspondants sont obtenus automatiquement lors de l'injection de la deuxième matière plastique.

Dans une autre variante du bracelet de l'ensemble 1 des figures 1 et 2, représentée aux figures 7 et 8, le brin 3 du bracelet comporte une âme 3' et des éléments décoratifs 14 ayant une forme générale d'anneau entourant étroitement l'âme 3' sur une partie de sa longueur. Ces éléments décoratifs 14 sont espacés les uns des autres de sorte que l'âme 3' est visible entre eux.

Les éléments décoratifs 14 sont solidaires de l'âme 3' et ne peuvent donc pas se déplacer par rapport à elle.

Ces éléments décoratifs 14 sont réalisés dans la même matière et en même temps que l'élément de boîte 2. Il suffit pour cela de donner au moule utilisé pour l'injection de la deuxième matière plastique une forme convenable. La présence de ces éléments décoratifs 14 n'augmente par conséquent pratiquement pas le prix de revient de l'ensemble 1, mais contribue à lui donner un aspect plaisant.

Il est évident que le brin 3 peut ne comporter qu'un seul élément décoratif 14. De même, le brin 4 peut également comporter un ou plusieurs éléments décoratifs semblables aux éléments 14 décrits ci-dessus.

La forme et les dimensions des éléments décoratifs 14 peuvent être quelconques et même être différentes d'un élément 14 à l'autre. En outre les âmes des brins 3 et 4 peuvent comporter, aux emplacements où ils sont entourés par ces éléments décoratifs 14, une ou plusieurs protubérances semblables aux protubérances 7, 8, 11 ou 12 des figures 3 et 5. De même, ces éléments décoratifs 14 peuvent comporter, chacun, une un ou plusieurs protubérances semblables aux protubérances 9 et 10 de la figure 4. Les éléments décoratifs 14, respectivement les âmes des brins 3 et 4, comportent alors le ou les logements correspondants. Ces dernières variantes ne sont pas illustrées.

Dans la variante du bracelet illustrée par les figures 9 et 10, l'âme 3' du brin 3 comporte des protubérances 15 disposées de part et d'autre des éléments décoratifs 14.

Comme dans les diverses variantes ci-dessus, ces protubérances 15 peuvent avoir une forme quelconque et entourer complètement ou partiellement l'âme 3' du brin 3. De même, ces protubérances 15 peuvent n'être en contact avec les éléments décoratifs que sur une partie des parois latérales de celui-ci.

Ces protubérances 15 contribuent à rendre les éléments décoratifs 14 solidaires de l'âme 3' du brin 3 et, en outre, à donner à l'ensemble 1 un aspect esthétique plaisant.

Il est évident que le brin 4 du bracelet peut également comporter des protubérances semblables aux protubérances 15 des figures 9 et 10.

En outre, les brins 3 et/ou 4 peuvent comporter d'autres protubérances disposées entre les protubérances 15 et n'ayant qu'un rôle purement esthétique. Une telle protubérance a été représentée en traits mixtes dans les figures 9 et 10 avec la référence 16.

Il est évident que les variantes illustrées par les figures 7 à 10 peuvent se combiner avec n'importe laquelle des variantes illustrées par les figures 1 à 6.

Il est également évident que la forme des divers éléments décrits ci-dessus, notamment la forme de l'élément de boîte 2, peut être différente de celle qui est représentée dans les figures 1 à 8. En outre, la surface extérieure des brins 3 et 4, de l'élément de boîte 2 et des éléments décoratifs 14 peut ne pas être lisse mais, par exemple, rugueuse ou striée, entièrement ou partiellement.

Dans toutes les variantes des figures 1 à 10 décrites ci-dessus, le bracelet de l'ensemble 1 selon l'invention pourrait être associé à un fermoir d'un genre connu quelconque, destiné à relier entre elles les extrémités des brins 3 et 4 qui ne sont pas reliées à l'élément de boîte 2.

Dans le cas d'un ensemble 1 selon la présente invention, un tel fermoir d'un genre connu présente cependant les inconvénients de devoir être fabriqué indépendamment de cet ensemble 1, et de devoir être fixé au bracelet de cet ensemble dans une opération de montage séparée. En outre, les fermoirs connus ont un aspect que ne s'accorde pas bien avec l'aspect de l'ensemble 1 selon l'invention.

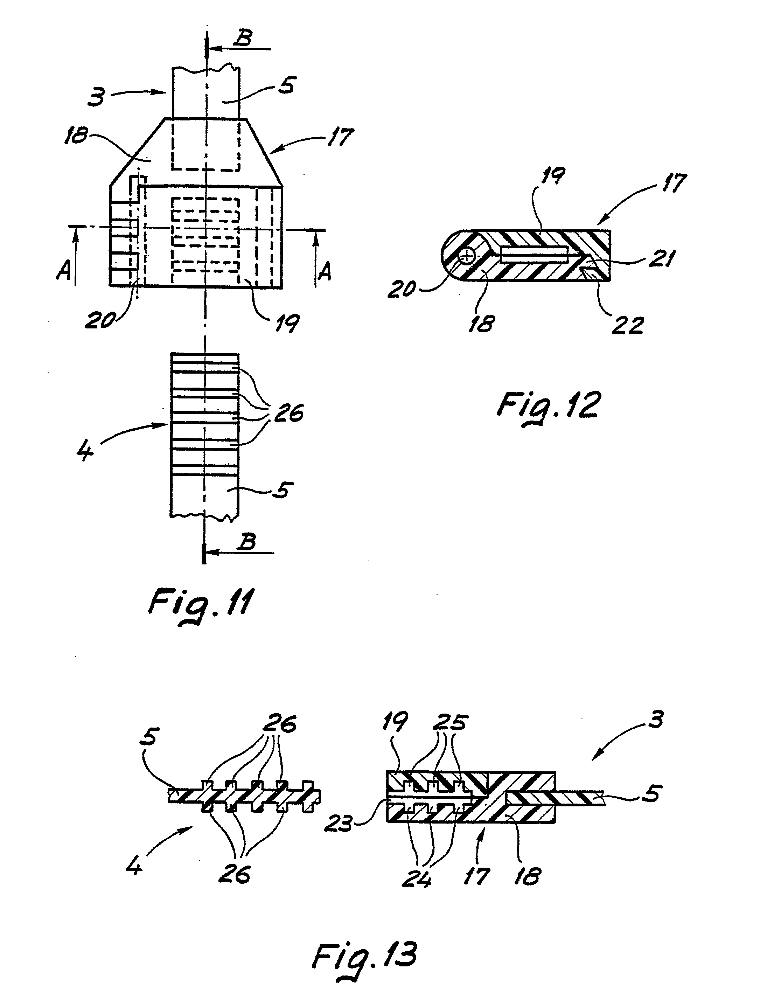

Les figures 11 à 13 représentent un fermoir 17 qui ne présente pas ces inconvénients et qui peut être avantageusement combiné avec n'importe laquelle des variantes de bracelet décrites ci-dessus.

Le fermoir 17 comporte un élément fixe 18 dont une partie entoure étroitement l'extrémité du brin 3 et qui en est solidaire, et un élément mobile 19. Les éléments fixe 18 et mobile 19 sont réunis de manière pivotante par un arbre 20 et forment ainsi une sorte de charnière.

Les éléments 18 et 19 comportent en outre des décrochements 21 et 22 situés à l'opposé de l'arbre 20 et ayant des formes telles que l'élément 19 reste fermement accroché à l'élément 18 lorsque le fermoir 17 est dans son état fermé. Ces formes sont en outre telles que les décrochements 21 et 22 peuvent être séparés pour permettre l'ouverture de ce fermoir 17 et à nouveau accrochés l'un à l'autre lorsque ce fermoir 17 doit être refermé.

La forme de ces décrochements 21 et 22 ne sera pas décrite ici car elle peut être choisie assez librement. Il faut cependant noter que, pour que cet accrochage et cette séparation des éléments 18 et 19 puissent se faire, il est nécessaire que l'un d'entre eux au moins présente une certaine élasticité, dans la zone des décrochements 21 et 22 tout au moins. Cette élasticité peut être obtenue par un choix judicieux du matériau utilisé pour réaliser l'élément concerné et de la forme de cet élément dans la zone de ces décrochements.

Lorsque le fermoir 17 est dans son état fermé, il subsiste dans sa partie centrale une cavité 23 qui est ouverte à l'extrémité du fermoir 17 opposée au brin 3. Les parois des éléments 18 et 19 qui délimitent cette cavité 23 comportent des logements 24, respectivement 25, qui se font face et qui, dans cet exemple, ont la forme de rainures parallèles entre elles et perpendiculaires à la direction générale de la longueur du brin 3.

L'extrémité du brin 4 comporte des protubérances 26 ayant une forme adaptée à la forme des logements 24 et 25, c'est-à-dire, dans cet exemple, la forme de nervures parallèles entre elles et perpendiculaires à la direction générale de la longueur du brin 4. Ces protubérances 26 sont destinées à coopérer avec les logements 24 et 25 pour retenir l'extrémité du brin 4 dans le fermoir 17 lorsque celui-ci est fermé.

L'utilisation du fermoir 17 est très simple et ressort clairement du dessin et des explications ci-dessus. Elle ne sera donc pas décrite en détail ici.

L'extrémité du brin 3 qui est entourée par une partie de l'élément 18 du fermoir 17 peut comporter une ou plusieurs protubérances semblables aux protubérances 7, 8, 11 ou 12 des figures 3 et 5. De même, la partie de l'élément 18 qui entoure l'extrémité du brin 3 peut comporter une ou plusieurs protubérances semblables aux protubérances 9 et 10 de la figure 4. L'élément 18, respectivement le brin 3, comporte alors le ou les logements correspondants. Ces dernières variantes ne sont pas illustrées.

Ces protubérances et ces logements ont bien entendu pour effet de renforcer la liaison du fermoir 17 avec le brin 3.

Les éléments 18 et 19 du fermoir 17 peuvent être fabriqués en même temps et dans la même matière que l'élément de boîte 2 et, le cas échéant, les éléments décoratifs 14. Il suffit pour cela de donner aux moules utilisés la forme voulue.

Les considérations faites ci-dessus à propos de la forme et de l'état des surfaces extérieures de l'élément de boîte 2 et des éléments décoratifs 14 s'appliquent également aux surfaces extérieures du fermoir 17.

Il faut noter que l'arbre 20 reliant les éléments 18 et 19 et les parties de ces éléments qui coopèrent avec cet arbre 20 peuvent être supprimés et remplacés par une lame mince de la même matière plastique que celle de ces éléments. Cette lame mince est bien entendu réalisée en même temps que ces éléments 18 et 19 et ne forme qu'une seule pièce avec eux. L'épaisseur de cette lame doit être choisie suffisamment faible pour qu'elle soit souple et permette le déplacement relatif des éléments 18 et 19.

Les diverses variantes du fermoir 17 mentionnées ci-dessus n'ont pas été représentées.

Diverses autres modifications peuvent être apportées à l'ensemble selon l'invention décrite ci-dessus.

Notamment, son aspect peut être facilement modifié, en choisissant d'autres matières thermoplastiques pour sa fabrication, ou en modifiant simplement la couleur de l'une des matières, ou des deux.

Cet aspect peut également être modifié en changeant la forme des moules utilisés pour l'injection des matières plastiques.

En outre, l'ensemble selon l'invention se prête bien à la fabrication en grandes séries et son prix de revient peut donc être assez bas.

## Revendications

1. Ensemble constitué d'un bracelet comportant au moins un brin (3, 4) dont au moins une première extrémité (3a, 4a) est réalisée en une première matière thermoplastique, d'un élément de boîte de montre (2) réalisé en une deuxième matière thermoplastique ayant une température de fusion supérieure à celle de ladite première matière thermoplastique, et de moyens de fixation de ladite extrémité (3a, 4a) dudit brin (3, 4) audit élément de boîte de montre (2), caractérisé par le fait que ledit élément de boîte (2) comporte une partie (5, 6) entourant au moins ladite extrémité (3a, 4a) dudit brin (3, 4), et que lesdits moyens de fixation comprennent une couche d'un mélange intime desdites première et deuxième matières thermoplastiques disposée entre ladite partie (5, 6) dudit élément de boîte de montre (2) et ladite extrémité (3a, 4a) dudit brin (3, 4) et reliant mécaniquement ladite extrémité (3a, 4a) audit élément (2).

2. Ensemble selon la revendication 1, caractérisé par le fait que ledit brin (3, 4) comporte une protubérance (7, 8; 11, 12) située sur ladite extrémité (3a, 4a) dudit brin (3, 4) et engagée dans un logement (7a, 8a) ménagé dans ladite partie (5, 6) dudit élément (2).

3. Ensemble selon la revendication 1, caractérisé par le fait que ladite partie (5, 6) dudit élément (2) comporte une protubérance (9, 10) engagée dans un logement (9a, 10a) ménagé dans ladite extrémité (3a, 4a).

4. Ensemble selon la revendication 1, caractérisé par le fait que ledit brin (3, 4) comporte une âme (3') réalisée en ladite première matière thermoplastique et un élément décoratif (14) réalisé en ladite deuxième matière thermoplastique, entourant ladite âme (3') sur une partie de sa longueur et solidaire de cette dernière.

5. Ensemble selon la revendication 4, caractérisé par le fait que ladite âme (3') comporte une protubérance engagée dans un logement ménagé dans ledit élément décoratif (14).

6. Ensemble selon la revendication 4, caractérisé par le fait que ledit élément décoratif (14) comporte une protubérance engagée dans un logement ménagé dans ladite âme (3').

7. Ensemble selon la revendication 1, dans lequel le bracelet comporte deux brins (3, 4), caractérisé par le fait que lesdits brins (3, 4) sont réunis en une seule pièce par une partie commune (13) située entièrement dans la matière dudit élément (2).

8. Ensemble selon la revendication 1, dans lequel le bracelet comprend un premier (3) et un deuxième brin (4), caractérisé par le fait qu'il comporte en outre un fermoir (17) réalisé en ladite deuxième matière thermoplastique, comportant des moyens pour retenir l'extrémité libre dudit deuxième brin (4) et ayant au moins une partie entourant l'extrémité libre dudit premier brin (3) et solidaire dudit premier brin (3), et par le fait qu'il comporte une deuxième couche d'un mélange intime desdites première et deuxième matières thermoplastiques disposée entre ladite partie dudit fermoir (17) et ladite extrémité libre dudit premier brin (3).

9. Procédé de fabrication d'un ensemble selon la revendication 1, comprenant la fabrication d'au moins ladite extrémité (3a, 4a) dudit brin (3, 4) par injection de ladite première matière thermoplastique dans un premier moule et la fabrication dudit élément de boîte de montre (2) par injection de ladite deuxième matière thermoplastique dans un deuxième moule, caractérisé par le fait que ladite deuxième matière thermoplastique est injectée sur ladite extrémité (3a, 4a) dudit brin (3, 4), fabriquée préalablement, de manière que ladite première matière thermoplastique de ladite extrémité (3a, 4a) fonde au moins superficiellement et se mélange intimement à ladite deuxième matière thermoplastique pour former ladite couche d'un mélange intime desdites première et deuxième matières thermoplastiques.

**Claims**

1. An assembly consisting of a wristlet comprising at least one band (3, 4) having at least one end (3a, 4a) made of a first thermoplastic material, of a watch-case element (2) made of a second thermoplastic material having a melting temperature greater than that of said first thermoplastic material, and of means for securing said end (3a, 4a) to said watch-case element (2), characterized in that said watch-case element (2) has a portion (5, 6) surrounding at least said end (3a, 4a) of said band (3, 4), and that said securing means comprise a layer of an intimate mixture of said first and second thermoplastic materials disposed between said portion (5, 6) of said watch-case element (2) and said end (3a, 4a) of said band (3, 4) and mechanically connecting said end (3a, 4a) to said element (2).

2. An assembly according to claim 1, characterized in that said band (3, 4) has a protuberance (7, 8, 11, 12) on said end (3a, 4a) of said band (3, 4) which engages in a recess (7a, 8a) formed in said portion (5, 6) of said element (2).

3. An assembly according to claim 1, characterized in that said element (2) has a protuberance (9, 10) which engages in a recess (9a, 10a) formed in said end (3a, 4a).

4. An assembly according to claim 1, characterized in that said band (3, 4) comprises a core portion (3') made of said first thermoplastic material and a decorative element (14) made of said second plastic material, which surrounds said core portion (3') over part of its length and which is solid therewith.

5. An assembly according to claim 4, characterized in that core portion (3') has a protuberance which engages in a recess formed in said decorative element (14).

6. An assembly according to claim 4, characterized in that said decorative element (14) has a protuberance which engages in a recess formed in said core portion (3').

7. An assembly according to claim 1, wherein the wristlet comprises two bands (3, 4), characterized in that said bands (3, 4) are united into a single component by a common portion (13) located wholly within the material of said element (2).

8. An assembly according to claim 1, wherein the wristlet comprises first (3) and second (4) bands, characterized in that it further comprises a clasp (17) made of said second thermoplastic material, which includes means for retaining the free end of said second band (4) and which has at least a portion that surrounds the free end of said first band (3) and solid with said first band (3), and in that it comprises a second layer of an intimate mixture of said first and second thermoplastic materials disposed between said portion of said clasp (17) and said free end of said first band (3).

9. A method of making an assembly according to claim 1, comprising making at least said end (3a, 4a) of said band (3, 4) by injecting said first thermoplastic material into a first mould and making said watch-case element (2) by injecting said second thermoplastic material into a second mould, characterized in that said second thermoplastic material is injected over said end (3a, 4a) of said band (3, 4), previously made, such that said first thermoplastic material of said end (3a, 4a) will melt at least superficially and will intimately mix with said second thermoplastic material to form said layer of an intimate mixture of said first and second thermoplastic materials.

**Patentansprüche**

1. Baugruppe, bestehend aus einem mindestens einen Strang (3, 4), von dem mindestens ein Ende (3a, 4a) aus einem ersten thermoplastischen Material besteht, umfassenden Armband, einem Uhrgehäuseelement (2), bestehend aus einem zweiten thermoplastischen Material mit einer Schmelztemperatur oberhalb der des ersten thermoplastischen Materials, und Mitteln zum Befestigen des genannten Endes (3a, 4a) des Stranges (3, 4) an dem Uhrgehäuseelement (2), dadurch gekennzeichnet, daß das Gehäuseelement (2) einen mindestens das genannte Ende (3a, 4a) des Strangs (3, 4) umschließenden Abschnitt (5, 6) umfaßt, und daß die Befestigungsmittel eine Schicht einer innigen Mischung des ersten und des zweiten thermoplastischen Materials umfassen, angeordnet zwischen dem genannten Abschnitt (5, 6) des Uhrgehäuseelements (2) und dem genannten Ende (3a, 4a) des Stranges und mechanisch das genannte Ende (3a, 4a) mit dem Element (2) verbindend.

2. Baugruppe nach Anspruch 1, dadurch gekennzeichnet, daß der Strang (3, 4) einen Vorsprung (7, 8; 11, 12) auf dem genannten Ende (3a, 4a) des Strangs (3, 4) im Eingriff in eine Ausnehmung (7a, 8a), eingearbeitet in den genannten Abschnitt (5, 6) des Elements (2) umfaßt.

3. Baugruppe nach Anspruch 1, dadurch gekennzeichnet, daß der genannte Abschnitt (5, 6) des Elements (2) einen Vorsprung (9, 10) im Eingriff mit einer Ausnehmung (9a, 10a), eingearbeitet in das genannte Ende (3a, 4a), umfaßt.

4. Baugruppe nach Anspruch 1, dadurch gekennzeichnet, daß der Strang (3, 4) eine Seele (3') aus dem ersten thermoplastischen Material und ein Dekorelement (14) aus dem zweiten thermoplastischen Material, das die Seele (3') auf einem Abschnitt ihrer Länge und mit ihr verbunden umfaßt.

5. Baugruppe nach Anspruch 4, dadurch gekennzeichnet, daß die Seele (3') einen Vorsprung aufweist, der in eine in das Dekorelement (14) eingearbeitete Ausnehmung eingreift.

6. Baugruppe nach Anspruch 4, dadurch gekennzeichnet, daß das Dekorelement (14) einen Vorsprung aufweist, der in eine in die Seele (3') eingearbeitete Ausnehmung eingreift.

7. Baugruppe nach Anspruch 1, bei der das Armband zwei Stränge (3, 4) umfaßt, dadurch gekennzeichnet, daß die Stränge (3, 4) durch einen vollständig in dem Material des Elements (2) angeordneten gemeinsamen Abschnitt miteinander verbunden sind.

8. Baugruppe nach Anspruch 1, bei der das Armband einen ersten (3) und einen zweiten (4) Strang umfaßt, dadurch gekennzeichnet, daß sie ferner einen aus dem zweiten thermoplastischen Material bestehenden Verschluß (17) umfaßt mit Mitteln zum Halten des freien Endes des zweiten Stranges (4) und mit mindestens einem das freie Ende des ersten Stranges (3) umschließenden und mit ihm verbundenen Abschnitt, und daß sie eine zweite Schicht einer innigen Mischung des ersten und des zweiten thermoplastischen Materials umfaßt, angeordnet zwischen dem genannten Abschnitt des Verschlusses (17) und dem genannten freien Ende des ersten Stranges (3).

9. Verfahren zum Herstellen einer Baugruppe nach Anspruch 1, umfassend das Herstellen mindestens des genannten Endes (3a, 4a) des Stranges (3, 4) durch Injektion des ersten thermoplastischen Materials in eine erste Form und Herstellen des Uhrgehäuseelements (2) durch Injektion des zweiten thermoplastischen Materials in eine zweite Form, dadurch gekennzeichnet, daß das zweite thermoplastische Material auf das zuvor hergestellte Ende (3a, 4a) des Strangs (3, 4) derart aufgespritzt wird, daß das erste thermoplastische Material des Endes (3a, 4a) mindestens oberflächlich aufschmilzt und sich innig mit dem zweiten thermoplastischen Material mischt zum Bilden der Schicht aus einer innigen Mischung des ersten und zweiten thermoplastischen Materials.

Fig.1

Fig.2    Fig.3    Fig.4    Fig.5

Fig.6

Fig.7    Fig.8

Fig.9    Fig.10

Fig.11

Fig.12

Fig.13